Europäisches Patentamt

European Patent Office

Office européen des brevets

(19)

(11) Veröffentlichungsnummer: **0 142 574**

**A1**

(12) **EUROPÄISCHE PATENTANMELDUNG**

(21) Anmeldenummer: **83111655.3**

(22) Anmeldetag: **22.11.83**

(51) Int. Cl.⁴: **G 01 N 1/28**

(43) Veröffentlichungstag der Anmeldung:
**29.05.85 Patentblatt 85/22**

(84) Benannte Vertragsstaaten:
**DE FR GB SE**

(71) Anmelder: **Freiherr von Gise, Hardo, Dr. med.**
**Schwärzlocher Strasse 110**
**D-7400 Tübingen(DE)**

(72) Erfinder: **Freiherr von Gise, Hardo, Dr. med.**
**Schwärzlocher Strasse 110**
**D-7400 Tübingen(DE)**

(54) **Befestigungsmittel für die beliebige räumliche Fixierung und Sicherung kleiner biologischer Gewebeproben in Inkubationskapseln für die Verwendung in automatisch arbeitenden Inkubations- und Aufblockeinrichtungen.**

(57) Als Befestigungsmittel für die beliebige räumliche Fixierung biologischer Gewebeproben bei der Paraffineinbettung kommt als Ausgangsmaterial Paraffin und/oder Wachs mit einem höheren Schmelzpunkt zur Anwendung als bei der Paraffininfiltration verwendet wird, wobei das Befestigungsmaterial (1) vorzugsweise in Platten- oder Hüllenform mit einer Vielzahl von Perforationen (2) als Gitter vorliegt, welches durch Untermischung eines geeigneten Faseranteiles mechanisch weiter verfestigt wird. Alternativ kann auch ein synthetisches Material mit ähnlichen physikalischen und chemischen Eigenschaften zur Anwendung kommen. Statt in Plattenform kann das Befestigungsmaterial auch in flüssiger, erhitzter Form unter Einsatz einer speziellen Schmelz- und Dosiereinrichtung für die räumliche Fixierung und Sicherung des biologischen Gewebes (3) in Inkubationskapseln (4) für automatische Infiltrations- und Aufblockeinrichtungen verwendet werden.

FIGUR 2

1

Die Erfindung bezieht sich auf ein Hilfsmittel bei der Einbettung und Aufblockung biologischer Präparate in Paraffin.

Für die lichtmikroskopische Untersuchung von biologischen Proben ist es notwendig, diese in einen schneidfähigen Zustand zu bringen. Als Routineverfahren hat sich die Einbettung des Gewebes in Paraffin durchgesetzt. Das biologische Gewebe wird hierzu durch Aldehydlösungen fixiert und stufenweise über Alkohol oder Aceton entwässert und über eine Zwischenstufe mit einem Intermedium (organisches Lösungsmittel) in flüssiges heißes Paraffin überführt. Bei allen auf dem Weltmarkt befindlichen Halbautomaten wird das Gewebe dann im heißen und paraffininfiltrierten Zustand aus der Inkubationskammer entnommen und muß in einem manuellen Verfahren dann aufgeblockt werden, damit es nach der Erstarrung des Paraffins dann für den Schneidevorgang in die Halterung eines Mikrotomes eingespannt werden kann. Üblicherweise werden die biologischen Präparate für die Einbettungsprozedur in Präparatekapseln gebracht, die gekennzeichnet werden können und eine spätere Identifizierung ermöglichen. Derartige Präparatekapseln besitzen perforierte Wände, um eine ungehinderte Infiltration des Gewebes mit den Inkubationslösungen zu ermöglichen. Die herkömmlichen Halbautomaten für die Gewebeeinbettung besitzen Inkubationskammern, die nach dem Prinzip eines einfachen Kochtopfes arbeiten, der über einen Reagenzienversorgungsteil wahlweise mit Reagenzien gefüllt werden kann. Die Präparatekapseln mit den biologischen Proben werden lose oder in Körben in diese Inkubationskammern eingebracht.

Zur Automatisierung des Prozesses wäre es wünschenswert, wenn die Präparate in speziellen Kapseln und im erstarrten Zustand des Paraffins aus der Inkubationskammer herausgenommen werden könnten, sodaß die Präparate nach der Herauslösung aus den Kapseln sofort mit einem Mikrotom geschnitten werden könnten, ohne daß eine nachfolgende manuelle Aufblockung derselben notwendig ist. Mit keiner der auf dem Markt befindlichen Inkubationskapseln wäre es möglich ein derartiges Verfahren zu realisieren. Hier wollen zwei parallele Erfindungen mit Patentanmeldung des gleichen Erfinders Abhilfe schaffen. Die vollautomatische Einbettung kleiner biologischer Gewebestücke ist jedoch mit den dort beschriebenen Verfahren alleine noch nicht möglich, da kleine Gewebeproben einerseits gegen Verlust gesichert werden müssen und andererseits müssen die Gewebeproben an einer ganz bestimmten Stelle der Inkubationskapsel sicher befestigt werden können, daß sie nach der Erstarrung des Paraffins in der Anschnittebene des Paraffinblockes liegen. Derartige Befestigungsmittel, die eine unabdingbare Voraussetzung für die Automatisierung sind, gibt es bis heute nicht.

Die Problematik eines derartigen Befestigungsmittels ist vielschichtig und es ergeben sich eine Reihe von Hauptforderungen, denen das Material gerecht werden muß:

1. Ausreichende Permeabilität für die im Einbettungsprozeß verwendeten Reagenzien.
2. Ausreichende Stabilität des Materials in den Reagenzien.
3. Vergleichbare Schneideeigenschaften wie Paraffin.
4. Gute plastische Verformbarkeit.
5. Sichere Haftung auf dem Kuststoff der Inkubationskapseln
6. Ausreichende Temperaturstabilität.

Hier will die Erfindung Abhilfe schaffen. Die Erfindung, wie sie in den Ansprüchen gekennzeichnet ist, löst die Aufgabe, ein Befestigungsmittel mit den obigen Eigenschaften zu schaffen durch die Verwendung eines netzförmig strukturierten Gitterwerkes aus Paraffin oder einer Mischung aus Paraffin und Wachs, welches durch Untermischung einer faserigen Substanz verstärkt wird. Das verwendete Paraffin bzw. Wachs besitzt forderungsgemäß einen um ca. 20°C höheren Erstarrungspunkt als das im Prozeßablauf für die Infiltration verwendete Paraffin. Nach manueller Anpressung an Kunststoff besitzt es eine genügend große Haftfähigkeit auf diesem, so daß auch diese Forderung erfüllt wird. Die Plastische Verformbarkeit und Schneidbarkeit sind ebenfalls optimal realisiert. Die ausreichende chemische Beständigkeit für die Dauer des Einbettungsprozesses konnte experimentel erwiesen werden. Um die fehlende Permeabilität für die Reagenzien zu erzielen wird das Material am zweckmäßigsten in Plattenform mit beliebig großen Perforationen hergestellt und zur besseren Handhabung bis zum Gebrauch beidseitig mit leicht abziebarer Folie abgedeckt.

Die durch die Erfindung erreichten Vorteile sind im wesentlichen darin zu sehen, daß es mit diesem Befestigungsmaterial erstmalig möglich ist den gesamten Einbettungs- und Aufblockungsprozeß des biologischen Gewebes zu automatisieren, da das Problem der beliebigen räumlichen Fixierung des Gewebes in der Inkubationskapsel gelöst ist. Andererseits ist gewährleistet, daß das in vieler Hinsicht wertvolle biologische Material (z.B. menschliches Biopsiematerial!) nicht aus der Inkubationskapsel verloren gehen kann, wenn es in ein solches Gitterwerk eingeschlagen und an der Kapsel fixiert wird. Auch ein vorzeitiges und ungewolltes Öffnen der Inkubationskapsel kann so zu keinem Verlust führen, so daß das Befestigungsmaterial auch im normalen Einbettungsprozeß mit herkömmlichen Inkubationskapseln verwendet werden kann. Die Handhabung ist einfach und der nach der Aufblockung folgende Schneideprozeß mit einem Mikrotom wird durch dieses um das biologische Gewebe herum befindliche Material in dem aufgeblockten Paraffinpräparat nicht beeinflußt.

3

Im folgenden wird die Erfindung und ihre Handhabung anhand von nur einen Ausführungsweg darstellenden Zeichnungen näher erläutert:

Es zeigt:

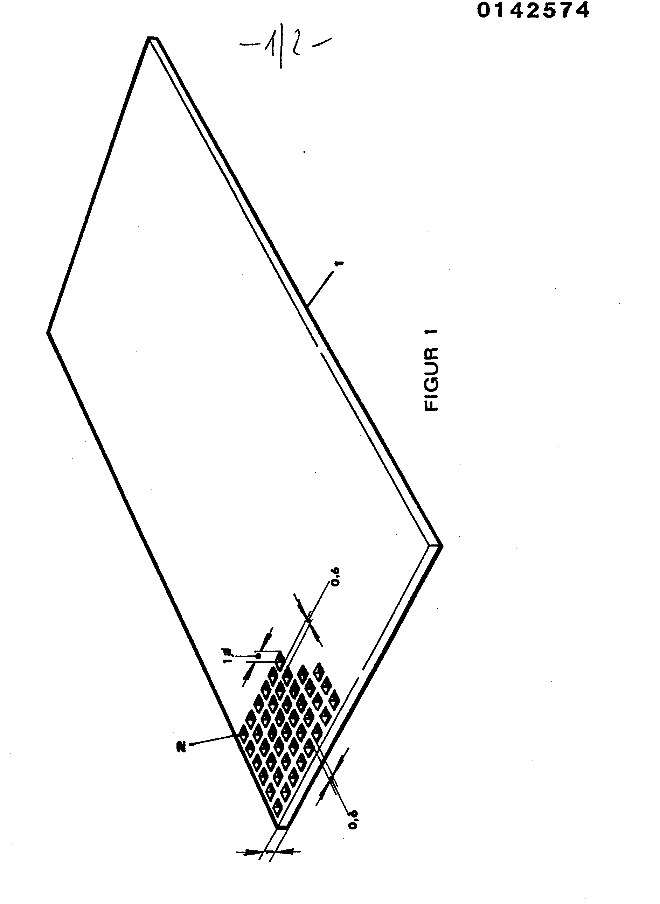

Figur 1 die Gitterstruktur des in Plattenform vorliegenden Befestigungsmaterials (Maßangaben in mm).

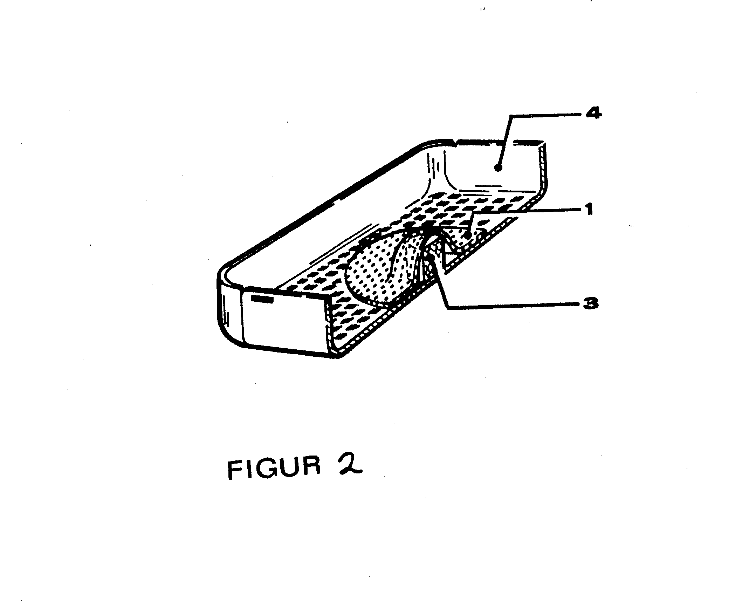

Figur 2 die Handhabung des Befestigungsmaterials bei der Orientierung und Fixierung biologischen Gewebes in einer im Schnitt dargestellten Inkubationskapsel ohne Deckel.

Das in den Figuren schematisch dargestellte Befestigungsmaterial 1 besitzt vorzugsweise Plattenform, wobei die gesamte Fläche durch Perforationen 2 durchbrochen ist, damit ein ungehinderter Reagenzienaustausch zwischen abgedecktem biologischen Gewebe 3 und umgebendem nicht dargestellten Reagenzienvolumen stattfinden kann. Das Befestigungsmaterial 1 wird zur räumlichen Fixierung des Gewebes manuell gegen die Grundfläche der Inkubationskapsel 4 gepreßt. Die Haftung des Befestigungsmaterials 1 in der Inkubationskapsel 4 könnte durch leichtes Anschmelzen weiter erhöht werden, was jedoch im Normalfall nicht nötig ist. Kleines Biosiematerial wird zur Sicherung gegen Verlust doppelt in das plastische Befestigungsmaterial 1 eingeschlagen und in gleicher Weise durch manuelles Anpressen in der Inkubationskapsel 4 befestigt. Die Inkubationskapsel wird dann mit einem Deckel verschlossen und für den Einbettungs- und Aufblockprozeß in eine speziell ausgestaltete Inkubationskammer eines automatischen Infiltrationssystemes gebracht. Nach der Infiltration des biologischen Gewebes mit Paraffin und der Erstarrung des Paraffins in der Inkubationskapsel ist das biologische Gewebe 3 an der gewünschten Stelle des Paraffinblockes lokalisiert.

4

Patentansprüche

1. Befestigungsmittel für die beliebige räumliche Fixierung biologischer Gewebeproben bei der Paraffineinbettung, gekennzeichnet dadurch, daß als Ausgangsmaterial ein Paraffin und/oder Wachs mit einem höheren Schmelzpunkt zur Anwendung kommt als bei der Paraffininfiltration verwendet wird, wobei das Befestigungsmaterial (1) vorzugsweise in Platten- oder Hüllenform mit einer Vielzahl von Perforationen (2) als Gitter vorliegt, welches durch Untermischung eines geeigneten Faseranteiles mechanisch weiter verfestigt wird.

2. Befestigungsmittel nach Anspruch 1, dadurch gekennzeichnet, daß als Ausgangsmaterial ein synthetisches Material verwendet wird, welches ähnliche physikalische und chemische Eigenschaften wie Paraffin oder Wachs aufweist.

3. Befestigungsmittel nach Anspruch 1 und 2, dadurch gekennzeichnet, daß das Befestigungsmittel anstatt in Platten- oder Hüllenform in flüssigem Zustand (erhitzt) unter Verwendung einer speziellen Schmelz- und Dosiereinheit zur Anwendung kommt, wobei das zu befestigende biologische Gewebe(3) netzförmig mit der Dosiereinheit mit flüssigem Befestigungsmittel, welches sofort erstarrt, abgedeckt und damit räumlich fixiert wird.

FIGUR 1

0142574

FIGUR 2

**0142574**
Nummer der Anmeldung

Europäisches
Patentamt

**EUROPÄISCHER RECHERCHENBERICHT**

EP 83 11 1655

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 733 768 (B.F. CARLS et al.) <br> * Spalte 6, Zeilen 4-29 * | 1,3 | G 01 N 1/28 |
| A | US-A-3 770 477 (T.E. WEICHSELBAUM) | | |

| | RECHERCHIERTE SACHGEBIETE (Int. Cl. ³) |
|---|---|
| | G 01 N 1/00 |

Der vorliegende Recherchenbericht wurde für alle Patentansprüche erstellt.

| Recherchenort | Abschlußdatum der Recherche | Prüfer |
|---|---|---|
| DEN HAAG | 10-07-1984 | ANTHONY R.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, überein-stimmendes Dokument

EPA Form 1503. 03.82